# EUROPEAN PATENT SPECIFICATION

(11) **EP 1 435 213 B1**
(45) Date of publication and mention of the grant of the patent: **13.09.2006**
(21) Application number: 03258225.6
(22) Date of filing: 29.12.2003
(51) Int. Cl.: A47J 27/09

(54) **A safety cap for the pressure release valve of a pressure cooker and a pressure cooker using the same**
Sicherheitskappe für ein Flüssigkeitsdruckentlastungsventil und Druckgargerät mit einer solchen Sicherheitskappe
Capuchon de sécurité pour vanne de décharge par la pression et appareil de cuisson sous pression comprenant ledit capuchon

(30) Priority: 30.12.2002 US 334083; 19.12.2003 US 741744
(43) Date of publication of application: 07.07.2004
(73) Proprietor: Hasegawa, Tom Hiroshi, Gardena, California (US)
(72) Inventor: Hasegawa, Tom Hiroshi, Gardena, California (US)
(74) Representative: Jenkins, Peter David

(56) References cited:
- FR-A- 632 000
- FR-E- 61 654
- FR-E- 61 959
- US-A- 1 584 516
- US-A- 5 011 035

## Description

The present invention relates to a pressure cooker and more specifically, to a pressure cooker with a safety cap that covers and protects the pressure release valve.

A pressure cooker is a cooking utensil (pot) that utilizes high-temperature and high-pressure steam to cook food inside the pot. The pot and its lid are designed to create an airtight space inside the pot. When the pot is heated, the air inside expands. The expanding air inside the pot is unable to escape, so the atmospheric pressure within the pot increases. As the atmospheric pressure increases, the boiling point of water also increases. Thus, a pressure cooker enables the water or moisture in the pot to become hotter than it would under normal atmospheric pressure.

With a conventional cooking pot, the water inside a pot turns into steam at around 100°C (212°F). The steam freely escapes the pot, leaving the atmospheric pressure within the pot close to normal and the temperature close to 100°C. Consequently, a large portion of the heating energy applied to the pot is wasted in warming the surrounding air.

In addition to creating a high-pressure environment within a pot, a pressure cooker also makes the water in a pot, in addition to the moisture within food, hotter than 100°C and this impacts cooking in three ways. First, food cooks much faster in a high-pressure and high-temperature environment, and requires far less cooking or heating time. The cooking time is shortened to one-third or one-fourth of the time required for a conventional cooking pot. Second, the decreased cooking time and trapped steam results in greater energy efficiency. A pressure cooker generally requires only one-fourth to one-third of the energy of a conventional cooking pot. Third, high-temperature and high-pressure cooking significantly improves cooking in high altitudes and in cold climates.

Unfortunately, there is an omnipresent risk of explosion caused by too much pressure inside the pot. This risk is very real because a pressure cooker prohibits the free circulation of air between the interior and the exterior of the pot and cooks food under high-pressure and high-temperature conditions. Present pressure cooker manufacturers alleviate this risk in many ways, including: using sturdier materials to construct pots; utilizing a timer to control the length of heating time; installing a pressure gauge to monitor the atmospheric pressure inside; and installing a pressure release valve, which is the most widely used method.

A pressure release valve is a device that is physically attached to a pressure cooker. Its function is to release the pressurized air in a pot when the atmospheric pressure within the pot exceeds a pre-set point. The valve is usually installed in the pressure cooker lid. The interior portion of the valve is shaped like a pipe, and it has a closed end surrounded by four or five air intake apertures of 1 mm to 2 mm in diameter. The exterior portion of the valve is an air release nozzle. This nozzle is kept closed by the pressure of a weight device or a spring mechanism. When the pressure of the air or steam coming into the valve becomes greater than the pressure that keeps the nozzle closed, the valve opens and releases the inside air, which reduces the atmospheric pressure within the pressure cooker.

While this type of safety device is very widely used, it is flawed in two major ways. First, the air intake apertures are easily clogged. When this occurs, the expanding air inside the pot has no means of release and the atmospheric pressure rises, which significantly increases the risk of explosion. The air intake apertures may be clogged by foods while cooking or by inadequate cleaning.

Second, putting aside the safety function that the valve actually provides, the valve's exterior appearance does not give the user an adequate sense of safety in using the pressure cooker. When a user sees only four or five very small clog-prone apertures (the number and size of the apertures vary according to size and type of the pressure cooker), he or she may feel more anxious than assured of the valve's safety. As if to increase this insecurity, the owner's manual accompanying the pressure cooker, in addition to other literature, repeatedly warn users about the importance of proper maintenance of the valve. While many consumers may realize the merits of a pressure cooker, unfortunately, they largely remain potential users.

US-A-5,011,035 discloses a pressure cooker having the features of the pre-characterising portion of claim 1.

FR-A-632000 discloses a relief valve for an autoclave.

US-A-1,584,516 discloses a cooking utensil in which the articles are cooked by steam comprising a compartment for receiving steam in which there is arranged a baffle operating to direct products of condensation back into the cooking utensil.

The two aims of the present invention are to provide a significantly safer pressure cooker by protecting the pressure release valve so that it will not clog, thereby preventing explosions caused by clogging, and to eliminate a user's insecurity regarding the proper functioning of the pressure release valve.

The basic idea of the present invention is to prevent food particles from reaching the pressure release valve during cooking, so that the air intake apertures cannot be clogged.

The aims are accomplished by an innovative and unique device specifically designed for a pressure cooker, which protects air intake apertures and prevent clogging.

The present invention provides a pressure cooker comprised of a pot, a fitted lid and a pressure release valve provided in said lid, a lower portion of said pressure release valve located inside said lid and having an air intake aperture and an upper portion of said pressure release valve located outside said lid and having an air release nozzle, characterised in that said lower portion of said pressure release valve is covered with a protective device that is comprised of a mesh casing body and an attachment frame, and wherein said mesh casing body is of a dome shape that has an outwardly curved outer surface and spacedly covers said lower portion of said pressure release valve, said mesh casing body having a plurality of openings each being equal to or smaller than air intake apertures of said pressure release valve; and said attachment frame is a substantially hollow cylinder secured to a bottom of said mesh casing body and attached to said lower portion of said pressure release valve, said attachment frame having an air hole that communicates with an interior of said pressure release valve.

The present invention further provides a protective device for a pressure release valve adapted to be used in a lid of a pressure cooker, said device comprising: a mesh casing body that is of a dome shape with an outwardly curved perforated outer surface and numerous opening and spacedly covers a part of said pressure release valve located inside said lid, a size of each of the openings of said mesh casing body being equal to or smaller than a size of an air intake aperture of said pressure release valve of said pressure cooker; and an attachment frame of a substantially hollow cylinder which is secured to a bottom of said mesh casing body and allows said mesh casing body be attached to said part of said pressure release valve, said attachment frame having an air hole that communicates with an interior of said pressure release valve.

More specifically, the mesh casing body has a mesh-like perforated surface structure, preferably having a wavy mesh, in the protective device (hereinafter referred to as "safety cap") which is installed around the pressure release valve of the pressure cooker. By design, the safety cap has numerous holes or openings that are slightly smaller or equal to the size of the air intake apertures. During cooking, the hot air or pressure inside the pressure cooker is allowed to escape when it is appropriate, while the safety cap prevents food particles that may clog the air intake apertures of a pressure release valve from passing through the safety cap. The sheer number of holes and the size of those holes in the surface of the safety cap greatly improves the means by which steam may escape while preventing food from reaching the air intake apertures entirely, thus protecting the pressure release valve so that it may serve its safety function.

Embodiments of the present invention will now be described by way of example only, with reference to the accompanying drawings, in which:-
Figure 1 illustrates a pressure cooker to which the present invention is applied;
Figure 2 shows in partial cross section how a snap-fit safety cap not according to the present invention attaches using elastic material;
Figure 3 shows in partial cross section how a screw safety cap not according to the present invention attaches;
Figure 4 shows in partial cross section how another type of screw safety cap not according to the present invention attaches;
Figure 5 is an enlarged partially cross sectional view of a screw safety cap of the present invention;
Figure 6 shows in partial cross section how a safety cap not according to the present invention attaches to a pressure cooker lid;
Figure 7 shows in cross section the detail of how a screw safety cap not according to the present invention attaches to a pressure cooker lid;
Figure 8 shows in cross section the detail of how a snap-fit safety cap not according to the present invention attaches to a pressure cooker lid;
Figure 9 shows in partial cross section how a screw safety cap not according to the present invention with its wavy mesh casing body attaches to a specialized lid chamber;
Figure 10 shows in cross section the detail of how a screw safety cap not according to the present invention attaches to a specialized lid chamber; and
Figure 11 shows in cross section the detail of how a snap-fit safety cap not according to the present invention attaches to a specialized lid chamber

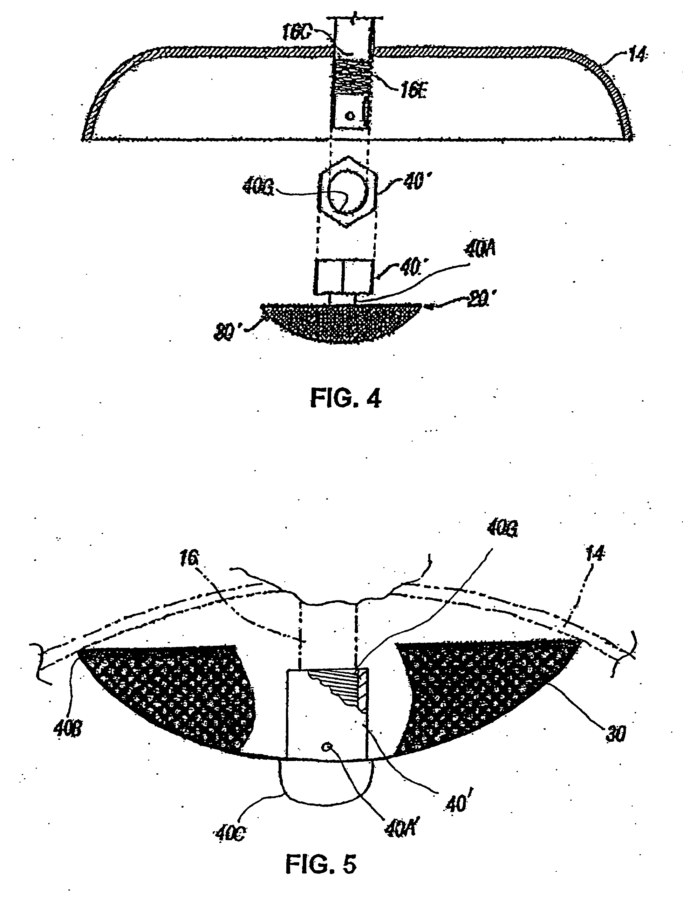

For the avoidance of doubt, the presently claimed invention is consistent with the embodiment illustrated in Figure 5. The remaining figures and description thereof have been retained for completeness as they share many common features with the presently claimed invention.

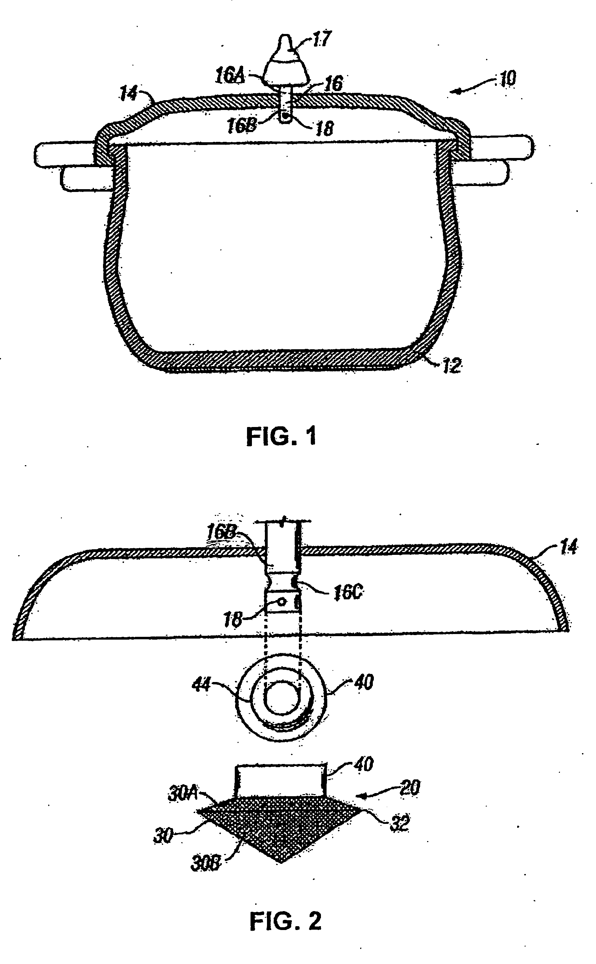

The safety cap of the present invention (See Figure 1) is used in an ordinary pressure cooker 10 that includes a pot 12, a lid 14 and a pressure regulator or pressure release valve 16 that releases the pressure (heated or hot air) inside the pot 12 during cooking. The pressure release valve 16 is provided at the center of the lid 14 and has a pressure release passage (not shown) therein.

More specifically, the pressure release valve 16 comprises an upper portion 16A, which is exposed outside the lid 14 and has a pressure regulation weight 17, and a lower portion 16B, which is located under the lid 14 and is covered by a safety cap 20 described below. The lower portion 16B of the pressure release valve 16 is formed with air intake apertures 18 (for instance, one aperture is opened in the lower end surface of the pressure release valve 16, and four apertures are opened in the peripheral area near the lower end of the pressure release valve 16; however, only one aperture is shown in Figure 1). These air intake apertures 18 communicate with, via the pressure release passage (not shown), an air release nozzle (not shown) opened in the upper portion 16A of the pressure release valve 16. Thus, heated air or the pressure inside the pressure cooker 10 during cooking is released through the air intake apertures 18 and the pressure release aperture.

As seen in Figure 2, the safety cap 20 is comprised of a mesh casing body 30 with numerous openings and an attachment frame 40 that is fixed to the top of mesh casing body 30. The attachment frame 40 is located at the center of the top surface of the mesh casing body 30. The mesh casing body 30 and the attachment frame 40 are both made of heat resistant material such as metal (e.g. stainless steel) and/or heat-resistant plastics that can withstand the high-temperature and high-pressure inside the pressure cooker 10. They are also formed rigid to avoid deformation that may be caused by high heat and high pressure during cooking. Each of the openings in the mesh casing body 30 is equal to or smaller than the air intake apertures 18 of the pressure release valve 16.

The mesh casing body 30 is comprised of a shallow top section 30A, which is in a conical shape and a relatively deep main section 30B, which is in a reversed conical shape. The lower edge of the top section 30A and the upper edge of the main section 30B are connected and form the mesh casing body 30 with a circumferential ridge 32. The mesh casing body 30 has a diameter that is three times larger than that of the pressure release valve 16 of the pressure cooker 10. In addition, the depth or the height of the mesh casing body 30 is designed to be greater than the length of the lower portion 16B of the pressure release valve 16. As a result, when the safety cap 20 is set so that it covers the pressure release valve 16, there is a space between the inner surface of the mesh casing body 30 and the outer surface of the pressure release valve 16.

The attachment frame 40 of a shallow, hollow cylinder shape is provided with an elastic ring 44 in its interior. The inner diameter of the elastic ring 44 is the same as (or slightly smaller than) the outer diameter of the lower portion 16B of the pressure release valve 16 of the pressure cooker 10. The elastic ring 44 is made of elastic material and the rest of the attachment frame 40 is made of rubber or another heat resistant elastic material.

The safety cap 20 is attached to the pressure release valve 16 by pushing or sliding on the attachment frame 40 of the safety cap 20 to the lower portion 16B of the pressure release valve 16. The attachment frame 40 has the elastic ring 44 inside it, so that the attachment frame 40 fits on the lower portion 16B of the pressure release valve 16.

A circumferential groove 16C on the outer surface of the pressure release valve 16 ensures that the attachment frame 40 itself and the elastic ring 44 are snugly fitted in this groove 16C. The result is that the safety cap 20 is securely attached to the pressure release valve 16.

Great care should be taken when attaching the safety cap 20 to the pressure release valve 16. The attachment frame 40 (or the elastic ring 44) should not cover or close the pressure intake apertures 18 of the pressure release valve 16.

With the safety cap 20 attached to the pressure release valve 16, the mesh casing body 30 of the safety cap 20 catches fine food particles that may block the air intake apertures 18 during cooking. Thus, the air intake apertures 18 of the pressure release valve 16 are prevented from clogging by food particles. The surface area of the safety cap 20 is substantially greater than the lower portion 16B of the pressure release valve 16 and in particular, greater than the air intake apertures 18. Therefore, it is nearly impossible for all the openings of the safety cap 20 to be clogged entirely since cooking will normally be over before the entire surface of the safety cap 20 is covered by food particles. Because the safety cap 20 is rigid and because it covers the air intake apertures 18, the pressure release valve is prevented from clogging.

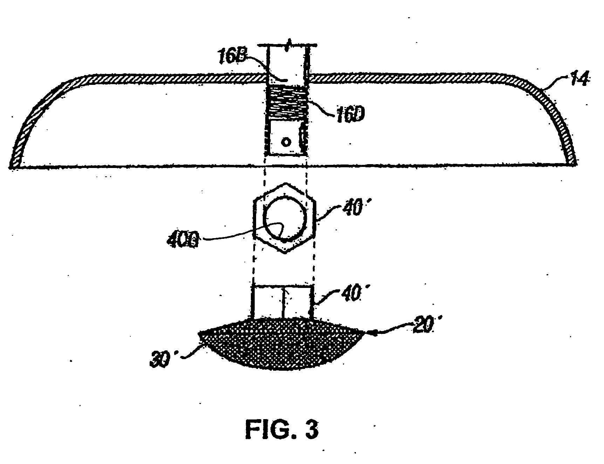

The safety cap 20 can also be mounted on the pressure release valve by making the attachment frame 40' internally threaded at 40G, so that it is screw-engaged with a thread 16D formed on the external surface of the pressure release valve 16 as shown in Figure 3.

By screwing the attachment frame 40' to the pressure release valve 16, the safety cap 20, like the safety cap 20 shown in Figure 2, is attached to the pressure release valve 16 with a space between the external surface of the pressure release valve 16 and the inner surface of the safety cap 20', so that the pressure release valve 16 is not in contact with the safety cap 20' when the safety cap 20' is screwed to the pressure release valve 16.

In the above structure, the internally threaded attachment frame 40' is secured to the top section 30A of the mesh casing body 30. However, such an internally threaded attachment frame 40' can be secured, at a lower end of its shank portion 40A, to the bottom center of the main section 30B of the mesh casing body 30, which has no top section 30A, as shown in Figure 4.

Furthermore, an attachment frame 40' that is internally threaded at 40G and substantially a hollow cylinder with no shank portion can be secured to the mesh casing body 30 as shown in Figure 5. In this structure, the safety cap is comprised of a mesh casing body 30 that is of a substantially shallow semi-sphere (dome) shape thus having a hollow interior and a curved outer surface and an attachment frame 40' that is secured to the bottom center of the mesh casing body 30. The internally threaded attachment frame 40' is formed with an air hole(s) 40A' that communicates with the interior of the pressure release valve 16 directly or via the air intake apertures (not shown) of the pressure release valve 16 when the mesh casing body 30 is screw-fastened to the pressure release valve 16.

In Figure 5, the reference numeral 40B is a ring-shaped reinforcing frame that is fixed to the upper edge of the mesh casing body 30 and comes into contact with the inner surface of the lid 14 when the mesh casing body 30 is mounted to the pressure release valve 16. The reference numeral 40C in Figure 5 is a knob that is used for securing the attachment frame 40' to the mesh casing body 30 and is also used when the mesh casing body 30 is fastened to the pressure release valve 16.

As in the same manner as the safety cap shown in Figure 3, the safety cap comprising the mesh casing body 30 is attached to the lower portion 16B (see Figure 3) of the pressure release valve 16 when the internally threaded attachment frame 40' is screwed to the thread 16D of the pressure release valve 16. Since the mesh casing body 30 has a curved (convex) outer surface, food particles less likely adhere to the mesh casing body 30. The air intake apertures of the pressure release valve 16 is thus prevented from clogging, assuring a smooth release of the pressure inside the pressure cooker during cooking.

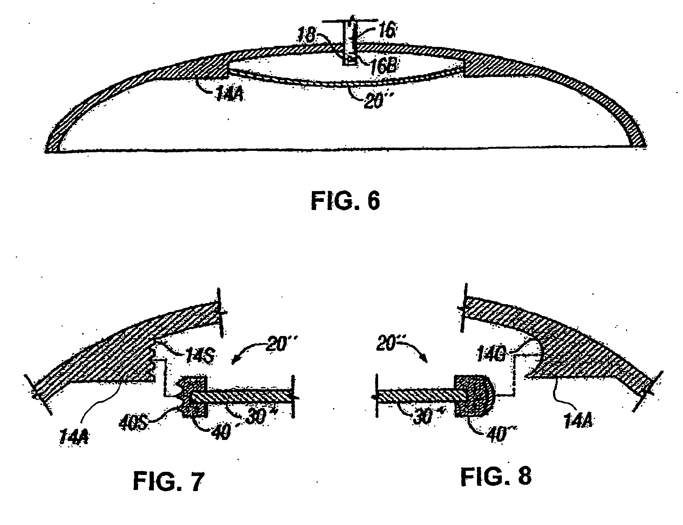

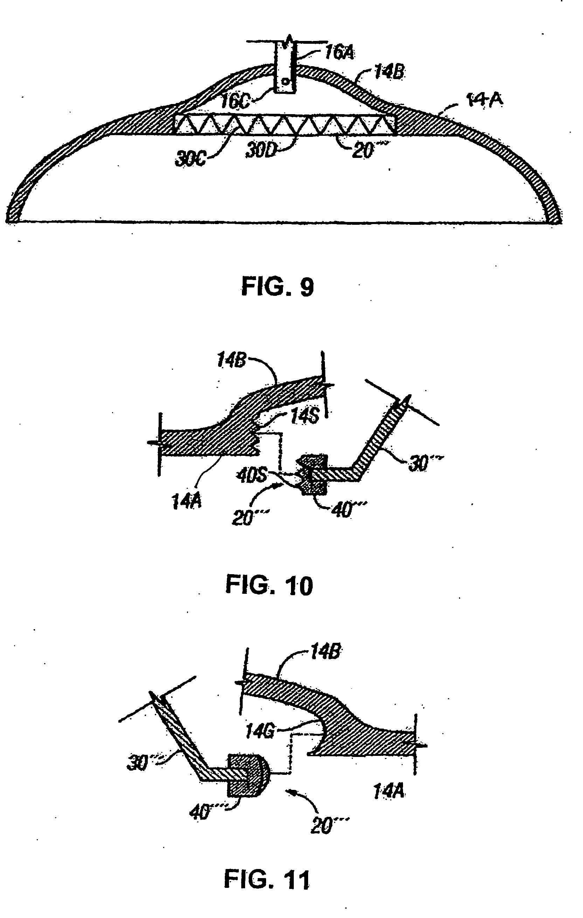

In the structures shown in Figures 8 and 9, the safety cap 20" (only a part of it is shown) is comprised of a circular attachment frame 40' and a mesh casing body 30" with its circumferential edge secured by the attachment frame 40'. The attachment frame 40' is formed on its outer circumferential surface, with an external screw thread 40s. The lid 14 of the pressure cooker is formed on its undersurface with a ring-shaped ridge 14A so that it surrounds the pressure release valve 16. The ring-shaped ridge 14A is formed on its inner circumferential surface with an internal screw thread 14s. The inner diameter of the ring-shaped ridge 14A of the lid 14 and the outer diameter of the attachment frame 40' are the same. The mesh casing body 30" has a convex shape, so it will not come in contact with the pressure release valve 16 when the safety cap 20" is attached to the lid 14.

With the structure described above, the safety cap 20" is attached to the under surface of the lid 14 by screwing the attachment frame 40' of the safety cap 20" to the ring shaped ridge 14A of the lid 14. The lower portion 16B of the pressure release valve 16 is covered by the safety cap 20", and the air intake apertures 18 of the pressure release valve 16 are prevented from clogging.

Instead of internal-thread 14s, in the structure shown in Figure 8, the attachment frame 40" of the safety cap 20" is made of an elastic material. Attachment frame 40" has a curved outer circumferential surface, and an internal circumferential groove 14G which holds the curved outer circumferential surface of the attachment frame 40" is formed in the internal lower edge area of the ring-shaped ridge 14A of the lid 14. Attachment frame 40" fits snugly into the internal lower edge area of the ring-shaped ridge 14A of the lid 14. The attachment frame 40" of the safety cap 20" that includes the mesh casing body 30" has an outer diameter that is the same as the inner diameter of the circumferential groove 14G of the ring-shaped ridge 14A of the lid 14.

By pushing the attachment frame 40" into the circumferential groove 14G of the ring-shaped ridge 14A of the lid 14, the attachment frame 40" is snap-fitted into the circumferential groove 14G of the undersurface of the lid 14. The safety cap 20" is thereby attached to the lid 14, and the pressure release valve 16 (or the lower portion 16B having the pressure intake aperture 18) is covered by the safety cap 20".

In the structure shown in Figures 9 and 10, the safety cap 20"' is comprised of a circular attachment frame 40"' and a mesh casing body 30"', with its circumferential edge secured by the attachment frame 40"'. The outer circumferential surface of the circular attachment frame 40"' is made with the external thread 40s. The mesh casing body 30" is made of a wavy mesh plate comprised of numerous flat sections 30C that are connected by numerous ridge portions 30D. The lid 14 of the pressure cooker is formed with an outwardly expanding dome-shaped portion 14b with the pressure release valve 16 at the center; and an internal screw thread 14s is formed in the interior lower edge area of the dome-shaped portion 14b. The inner diameter of the interior lower edge area of the dome-shaped portion 14b of the lid 14 and the outer diameter of the attachment frame 40"' of the safety cap 20"' are the same.

The safety cap 20"' is mounted on the under surface of the lid 14 by screwing the attachment frame 40"' of the safety cap 20"' to the inside of the dome-shaped portion 14b of the lid 14. The lower portion 16B of the pressure release valve 16 is covered by the safety cap 20"', and this prevents the air intake apertures of the pressure release valve 16 from clogging. Because of its dome-shaped portion 14b, the safety cap 20"', and the mesh casing body 30"' that is formed by the wavy mesh plate, which is comprised of the numerous flat sections 30C, avoids contact with the pressure release valve 16.

Due to the ridged portions 30D, food particles are less likely to be caught by the safety cap 20"', but some of them are still caught by the flat sections 30C. The more ridges portions 30D the safety cap 20"' has, the less food particles are caught or trapped by the safety cap 20"'; consequently, the safety cap 20"' prevents itself from clogging and thus efficiently performs its intended function.

The safety cap 20"' can also be installed by a snap-fit attachment to the specialized lid chamber. More specifically, in the structure shown in Figure 11, the attachment frame 40"" of the safety cap 20"' is made of an elastic material. Attachment frame 40"" has a curved outer circumferential surface, and an internal circumferential groove 14G which holds the curved outer circumferential surface of the attachment frame 40"" is formed in the internal lower edge area of the ring-shaped ridge 14A of the lid 14. Attachment 40"" fits snugly into the internal lower edge area of the ring-shaped ridge 14A of the lid 14. The attachment frame 40"" of the safety cap 20"' that includes the mesh casing body 30"' has an outer diameter that is the same as the inner diameter of the circumferential groove 14G of the ring-shaped ridge 14A of the lid 14.

By pushing the attachment frame 40"" of the safety cap 20"' into the circumferential groove 14G' of the lid 14, the attachment frame 40"" is snap-fitted into the circumferential groove 14G'. The safety cap 20"' is thereby attached to the lid 14, and the pressure release valve 16 is covered by the safety cap 20"'.

In the illustrated structures, the attachment frame 40 (40', 40", 40"', 40"") is in a circular shape; however, it can also take other shapes such as a square, rectangle or oval.

The safety cap 20 (20', 20", 20"') in the figures has a curved surface; however, it can also have a planar surface by making the safety cap 20 (particularly, the mesh casing body 30 (30', 30") in a pyramid or triangular pyramid.

Lastly, by making the attachment frame 40 of the safety cap 20 with a magnetic material, the safety cap 20 can be magnetically mounted to the undersurface of the lid 14. When the attachment frame 40 is made with a magnetic material such as carbon core stainless steel, then screw-mounting or snap-fit mounting are unnecessary.

## Claims

1. A pressure cooker (10) comprised of a pot (12), a fitted lid (14) and a pressure release valve (16) provided in said lid (14), a lower portion (16B) of said pressure release valve (16) located inside said lid (14) and having an air intake aperture (18) and an upper portion (16A) of said pressure release valve (16) located outside said lid(14) and having an air release nozzle, **characterised in that**
said lower portion (16B) of said pressure release valve (16) is covered with a protective device (20) that is comprised of a mesh casing body (30) and an attachment frame (40'), and wherein
said mesh casing body (30) is of a dome shape that has an outwardly curved outer surface and spacedly covers said lower portion (16B) of said pressure release valve (16), said mesh casing body (30) having a plurality of openings each being equal to or smaller than air intake apertures (18) of said pressure release valve (16); and
said attachment frame (40') is a substantially hollow cylinder secured to a bottom of said mesh casing body (30) and attached to said lower portion (16B) of said pressure release valve (16), said attachment frame (40') having an air hole (40A') that communicates with an interior of said pressure release valve (16).

2. The pressure cooker according to claim 1, wherein said protective device (20) is attached via said attachment frame (40) to said lower portion (16B) of said pressure release valve (16) so as to cover said lower portion (16B) of said pressure release valve (16).

3. The pressure cooker according to claim 1, wherein said protective device (20) is attached via said attachment frame (40) to an under surface of said lid (14) so as to cover said lower portion (16B) of said pressure release valve (16).

4. The pressure cooker according to claim 2, wherein said protective device (20) is magnetically attached to said lower portion (16B) of said pressure release valve (16).

5. The pressure cooker according to claim 3, wherein said protective device (20) is magnetically attached to said inner surface of said lid (14).

6. The pressure cooker according to claim 2, wherein said protective device (20) is attached to said lower portion (16B) of said pressure release valve (16) by screw engagement (16D).

7. A protective device (20) for a pressure release valve (16) adapted to be used in a lid (14) of a pressure cooker (10), said device (20) **characterized by**:
a mesh casing body (30) that is of a dome shape with an outwardly curved perforated outer surface and numerous opening and spacedly covers a part (16B) of said pressure release valve (16) located inside said lid (14), a size of each of the openings of said mesh casing body being equal to or smaller than a size of an air intake aperture of said pressure release valve (16) of said pressure cooker (10); and
an attachment frame (40') of a substantially hollow cylinder which is secured to a bottom of said mesh casing body (30) and allows said mesh casing body (30) to be attached to said part (16B) of said pressure release valve (16), said attachment frame (40') having an air hole (40A') that communicates with an interior of said pressure release valve (16).

8. The protective device according to claim 7, wherein said mesh casing body (40') is provided with a ring-shaped reinforcing frame (40B) that is fixed to an upper edge of said mesh casing body (30) and comes into contact with an inner surface of said lid (14) when said protective device is mounted on said pressure release valve of said pressure cooker (16).

9. The protective device according to claim 7, further comprising a knob (40C) for attaching said attachment frame (40') to said mesh casing body (30) and for attaching said mesh casing body (30) to said pressure release valve (16).

## Patentansprüche

1. Druckkochtopf/ (10), aufweisend einen Topf (12), einen daran angepassten Deckel (14) und ein in dem Deckel (14) vorgesehenes Druckablassventil (16), wobei sich ein unterer Teil (16B) des Druckablassventils (16) innerhalb des Deckels (14) befindet und eine Lufteinlassöffnung (18) hat und sich ein oberer Teil (16A) des Druckablassventils (16) außerhalb des Deckels (14) befindet und eine Luftablassdüse hat, **dadurch gekennzeichnet, dass**
der untere Teil (16B) des Druckablassventils (16) mit einer Schutzvorrichtung (20) bedeckt ist, die einen Maschengehäusekörper (30) und einen Befestigungsrahmen (40') aufweist, und wobei
der Maschengehäusekörper (30) eine Kuppelform hat, die eine nach außen hin gewölbte äußere Oberfläche hat und den unteren Teil (16B) des Druckablassventils (16) beabstandet bedeckt, und der Maschengehäusekörper (30) eine Mehrzahl von Öffnungen hat, von denen jede gleich oder kleiner ist als Lufteinlassöffnungen (18) des Druckablassventils (16); und
der Befestigungsrahmen (40') ein im Wesentlichen hohler Zylinder ist, der an einem Boden des Maschengehäusekörpers (30) befestigt und an dem unteren Teil (16B) des Druckablassventils (16) angebracht ist, wobei der Befestigungsrahmen (40') ein Luftloch (40A') hat, das in Verbindung mit einem Innenraum des Druckablassventils (16) steht.

2. Druckkochtopf nach Anspruch 1, wobei die Schutzvorrichtung (20) mittels des Befestigungsrahmens (40') an dem unteren Teil (16B) des Druckablassventils (16) angebracht ist, um den unteren Teil (16B) des Druckablassventils (16) zu bedecken.

3. Druckkochtopf nach Anspruch 1, wobei die Schutzvorrichtung (20) mittels des Befestigungsrahmens (40') an einer unteren Oberfläche des Deckels (14) angebracht ist, um den unteren Teil (16B) des Druckablassventils (16) zu bedecken.

4. Druckkochtopf nach Anspruch 2, wobei die Schutzvorrichtung (20) magnetisch an dem unteren Teil (16B) des Druckablassventils (16) angebracht ist.

5. Druckkochtopf nach Anspruch 3, wobei die Schutzvorrichtung (20) magnetisch an der inneren Oberfläche des Deckels (14) angebracht ist.

6. Druckkochtopf nach Anspruch 2, wobei die Schutzvorrichtung (20) durch ein Angreifen mittels Schraube (16D) an dem unteren Teil (16B) des Druckablassventils (16) angebracht ist.

7. Schutzvorrichtung (20) für ein Druckablassventil (16), das für die Verwendung in einem Deckel (14) eines Druckkochtopfs (10) ausgebildet ist, wobei die Vorrichtung (20) aufweist:
einen Maschengehäusekörper (30), der eine Kuppelform mit einer nach außen gewölbten perforierten äußeren Oberfläche und mehreren Öffnungen hat und einen sich innerhalb des Deckels (14) befindlichen Teil (16B) des Druckablassventils (16) beabstandet bedeckt, wobei eine Größe jeder der Öffnungen des Maschengehäusekörpers gleich oder kleiner ist als eine Größe einer Lufteinlassöffnung des Druckablassventils (16) des Druckkochtopfs (10); und
einen Befestigungsrahmen (40') aus einem im Wesentlichen hohlen Zylinder, der an einem Boden des Maschengehäusekörpers (30) befestigt ist und die Anbringung des Maschengehäusekörpers (30) an dem Teil (16B) des Druckablassventils (16) ermöglicht, wobei der Befestigungsrahmen (40') ein Luftloch (40A') hat, das in Verbindung mit einem Innenraum des Druckablassventils (16) steht.

8. Schutzvorrichtung nach Anspruch 7, wobei der Maschengehäusekörper (40') mit einem ringförmigen verstärkenden Rahmen (40B) versehen ist, der an einem oberen Rand des Maschengehäusekörpers (30) befestigt ist und in Kontakt mit einer inneren Oberfläche des Deckels (14) kommt, wenn die Schutzvorrichtung an das Druckablassventil des Druckkochtopfs (16) montiert ist.

9. Schutzvorrichtung nach Anspruch 7, ferner aufweisend einen Knopf (40C) zum Anbringen des Befestigungsrahmens (40') an dem Maschengehäusekörper (30) und zum Anbringen des Maschengehäusekörpers (30) an dem Druckablassventil (16).

## Revendications

1. Autocuiseur (10) constitué d'un pot (12), d'un couvercle ajusté (14) et d'une soupape (16) de surpression disposée dans ledit couvercle (14), une partie inférieure (16B) de ladite soupape (16) de surpression étant située à l'intérieur dudit couvercle (14) et comportant une ouverture (18) d'entrée, et une partie supérieure (16A) de ladite soupape (16) de surpression étant située à l'extérieur dudit couvercle (14) et comportant une buse de libération d'air, **caractérisé en ce que**
ladite partie inférieure (16B) de ladite soupape (16) de surpression est couverte par un dispositif (20) de protection qui est constitué d'un corps (30) de boîtier en tissu métallique et d'un bâti (40') d'assujettissement, et dans lequel
ledit corps (30) de boîtier en tissu métallique a une forme de dôme qui comporte une surface extérieure courbée vers l'extérieur et qui couvre de façon espacée ladite partie inférieure (16B) de ladite soupape (16) de surpression, ledit corps (30) de boîtier en tissu métallique comportant une pluralité d'ouvertures qui sont toutes égales aux ouvertures (18) d'entrée d'air de ladite soupape (16) de surpression, ou plus petites que celles-ci ; et
ledit bâti (40') d'assujettissement est un cylindre sensiblement creux fixé à une partie inférieure dudit corps (30) de boîtier en tissu métallique et assujetti à ladite partie inférieure (16B) de ladite soupape (16) de surpression, ledit bâti (40') d'assujettissement comportant un trou (40A') d'air qui communique avec une partie intérieure de ladite soupape (16) de surpression.

2. Autocuiseur selon la revendication 1, dans lequel ledit dispositif (20) de protection est assujetti, via ledit bâti (40') d'assujettissement, à ladite partie inférieure (16B) de ladite soupape (16) de surpression de façon à couvrir ladite partie inférieure (16B) de ladite soupape (16) de surpression.

3. Autocuiseur selon la revendication 1, dans lequel ledit dispositif (20) de protection est assujetti, via ledit bâti (40') d'assujettissement, à une surface inférieure dudit couvercle (14) de façon à couvrir ladite partie inférieure (16B) de ladite soupape (16) de surpression.

4. Autocuiseur selon la revendication 2, dans lequel ledit dispositif (20) de protection est assujetti de façon magnétique à ladite partie inférieure (16B) de ladite soupape (16) de surpression.

5. Autocuiseur selon la revendication 3, dans lequel ledit dispositif (20) de protection est assujetti de façon magnétique à ladite surface intérieure dudit couvercle (14).

6. Autocuiseur selon la revendication 2, dans lequel ledit dispositif (20) de protection est assujetti à ladite partie inférieure (16B) de ladite soupape (16) de surpression au moyen d'un engagement par vis (16D).

7. Dispositif (20) de protection pour une soupape (16) de surpression adaptée pour utilisation dans un couvercle (14) d'un autocuiseur (10), ledit dispositif (20) comprenant :
un corps (30) de boîtier en tissu métallique qui a une forme de dôme pourvu d'une surface extérieure courbée vers l'extérieur perforée et de nombreuses ouvertures et qui couvre de façon espacée une partie (16B) de ladite soupape (16) de surpression située à l'intérieur dudit couvercle (14), une taille de chacune des ouvertures dudit corps de boîtier en tissu métallique étant égale à une taille d'une ouverture d'entrée d'air de ladite soupape (16) de surpression dudit autocuiseur (10), ou étant plus petite que celle-ci ; et
un bâti (40') d'assujettissement constitué d'un cylindre sensiblement creux qui est fixé à une partie inférieure dudit corps (30) de boîtier en tissu métallique et qui permet d'assujettir ledit corps (30) de boîtier en tissu métallique à ladite partie (16B) de ladite soupape (16) de surpression, ledit bâti (40') d'assujettissement comportant un trou (40A') d'air qui communique avec une partie intérieure de ladite soupape (16) de surpression.

8. Dispositif de protection selon la revendication 7, dans lequel ledit corps (40') de boîtier en tissu métallique est pourvu d'un bâti (40B) de renfort en forme d'anneau qui est fixé à un bord supérieur dudit corps (30) de boîtier en tissu métallique et qui vient en contact avec une surface intérieure dudit couvercle (14) lorsque ledit dispositif de protection est monté sur ladite soupape de surpression dudit autocuiseur (16).

9. Dispositif de protection selon la revendication 7, comprenant en outre un bouton (40C) pour assujettissement dudit bâti (40') d'assujettissement audit corps (30) de boîtier en tissu métallique et pour assujettissement dudit corps (30) de boîtier en tissu métallique à ladite soupape (16) de surpression.
